(19) **Europäisches Patentamt**

**European Patent Office**

**Office européen des brevets**

(11) **EP 0 857 691 B1**

(12) **EUROPÄISCHE PATENTSCHRIFT**

(45) Veröffentlichungstag und Bekanntmachung des Hinweises auf die Patenterteilung:
**10.10.2001   Patentblatt 2001/41**

(51) Int Cl.⁷: **C01F 11/18**, C04B 33/13

(21) Anmeldenummer: **98101510.0**

(22) Anmeldetag: **29.01.1998**

(54) **Rieselfähige Erdalkalicarbonate**

Pourable alkaline-earth carbonates

Carbonates alcalino-terreux coulables

(84) Benannte Vertragsstaaten:
**AT BE CH DE DK ES FR GB GR IT LI NL PT SE**

(30) Priorität: **06.02.1997  DE 19704458**

(43) Veröffentlichungstag der Anmeldung:
**12.08.1998   Patentblatt 1998/33**

(73) Patentinhaber: **SOLVAY BARIUM STRONTIUM GmbH**
**D-30173 Hannover (DE)**

(72) Erfinder:
  • **Pfeifer, Hans-Ludwig, Dr.**
    **53557 Bad Hönningen (DE)**
  • **Rabe, Jürgen, Dr.**
    **56598 Rheinbrohl (DE)**
  • **Thiebes, Karl-Heinz**
    **53557 Bad Hönningen (DE)**
  • **Riechers, Heinz-Hermann, Dr.**
    **53557 Bad Hönningen (DE)**
  • **Engels, Achim**
    **53562 St. Katharinen (DE)**

(74) Vertreter: **Lauer, Dieter, Dr.**
    **Solvay Pharmaceuticals GmbH,**
    **Hans-Böckler-Allee 20**
    **30173 Hannover (DE)**

(56) Entgegenhaltungen:
  GB-A- 1 306 707       US-A- 3 322 683
  US-A- 3 615 811       US-A- 3 738 938
  US-A- 4 888 161       US-A- 4 888 308

## Beschreibung

Die Erfindung bezieht sich auf ein Verfahren zur Herstellung eines rieselfähigen Bariumcarbonats und Strontiumcarbonats unter Verwendung von grenzflächenaktiven Verbindungen.

Bariumcarbonat wird in der Ziegelindustrie zur Verhinderung von Ausblühungen eingesetzt sowie beispielsweise auch - wie auch Strontiumcarbonat - in der Glasherstellung. Üblicherweise werden die beiden Carbonate derart hergestellt, daß aus wasserlöslichen Salzen, beispielsweise den Sulfiden oder Chloriden, mittels Kohlendioxid oder Alkalicarbonat das gewünschte Bariumcarbonat bzw. Strontiumcarbonat ausgefällt wird. Die dabei erhaltenen Produkte zeichnen sich durch eine nicht besonders gute Rieselfähigkeit aus. Bei der Anwendung ist eine gute Rieselfähigkeit allerdings wünschenswert. Aufgabe der vorliegenden Erfindung ist es, ein Verfahren anzugeben, mit welchem rieselfähiges Bariumcarbonat bzw. Strontiumcarbonat mit kleiner Körnung hergestellt werden kann. Diese Aufgabe wird durch das in den Ansprüchen angegebene Verfahren gelöst.

Das erfindungsgemäße Verfahren zur Herstellung von rieselfähigem Erdalkalicarbonat aus der Gruppe bestehend aus Bariumcarbonat und Strontiumcarbonat sieht vor, daß man eine wäßrige Zubereitung erzeugt, die mindestens 50 Gew.-% des Carbonats in einer Körnung von 0,1 bis 1 μm enthält, die zusätzlich eine oder mehrere organische grenzflächenaktive Verbindungen enthält, wobei bezogen auf die Trockensubstanz eine Gesamtmenge von 0,01 bis 1 Gew.-%, vorzugsweise 0,01 bis 0,5 Gew.-% an grenzflächenaktiver Verbindung in der Zubereitung im wesentlichen gleichmäßig verteilt enthalten ist, und man die Zubereitung trocknet und zerkleinert, um im wesentlichen trockenes, rieselfähiges Erdalkalicarbonat mit einer Körnung von bis zu 10 um zu erhalten. Die Zubereitung hat die Konsistenz eines Teigs. Bevorzugt stellt man mit dem erfindungsgemäßen Verfahren rieselfähiges Bariumcarbonat her.

Die grenzflächenaktive Verbindung wird vorzugsweise in einer solchen Menge eingesetzt, daß sie bezogen auf die Trockensubstanz in einer Menge von 0,01 bis 0,5 Gew.-% in der Zubereitung (bzw. im getrockneten Produkt) enthalten ist.

Die bekannten anionischen, kationischen bzw. amphoteren organischen grenzflächenaktiven Verbindungen und Gemische derselben sind verwendbar. Besonders bevorzugt sind anionische grenzflächenaktive Verbindungen. Hervorragend eignen sich organische Sulfat- oder Sulfonat-Derivate, vorzugsweise in Form der Natrium-, Kalium- oder Ammoniumsalze. Sehr gut geeignet sind insbesondere die Natriumsalze, aber auch die Kalium- oder Ammoniumsalze von p-Alkylbenzolsulfonaten mit 8 bis 20 Kohlenstoffatomen in der Alkylkette. Ebenfalls gut geeignet sind Alkylnaphthalinsulfonate sowie Alkansulfonate und Paraffinsulfonate, auch hier insbesondere die Natriumsalze. Alkansulfonate haben meistens 12 bis 18 Kohlenstoffatome in der Alkankette; meist handelt es sich (herstellungsbedingt) um Gemische homologer Alkane. Gut brauchbar sind auch $\alpha$-Olefinsulfonate mit 12 bis 18 Kohlenstoffatomen in der Olefinkette.

Gut geeignet sind auch grenzflächenaktive Verbindungen vom Sulfat-Typ, das sind Salze der sauren Schwefelsäureester der allgemeinen Formel $ROSO_3M$, worin M üblicherweise das Natrium-, Kalium- oder Ammoniumkation ist. Bei der Gruppe R handelt es sich beispielsweise um primäre, lineare Alkylgruppen mit 8 und mehr, beispielsweise bis zu 20, Kohlenstoffatomen. R kann auch für die Additionsprodukte von Schwefelsäure an $\alpha$-Olefine stehen; rein formal entsprechen die Produkte den Kondensationsprodukten von sekundären Alkoholen und Schwefelsäure. Gut geeignet sind Sulfate aus der Herstellung von linearen $\alpha$-Olefinen mit 8 bis 18 Kohlenstoffatomen und Schwefelsäure.

Gut geeignet sind auch grenzflächenaktive Verbindungen vom Ethersulfat-Typ. Dies ist die Kurzbezeichnung für Salze, insbesondere Natriumsalze, von Schwefelsäurehalbestern der Alkyl- oder Alkylaryloligoglycolether der allgemeinen Formel $RO(CH_2CH_2O)_nSO_3Na$. Es handelt sich gewöhnlich um Homologengemische von Verbindungen mit n = 0, 1, 2 ...; die Zahl n in der Formel gibt den mittleren Oxethylierungsgrad an. Besonders gut geeignet sind solche Alkylethersulfate, die einen mittleren Oxethylierungsgrad von 2 bis 4 aufweisen und von C12-C14-Fettalkoholen abgeleitet sind (Fettalkoholpolyalkylenglycolethersulfate).

Brauchbar sind auch kationische grenzflächenaktive Verbindungen wie Laurylaminpolyethylenglycolether, und amphotere grenzflächenaktive Verbindungen, insbesondere Betaine. Sehr gut geeignet sind Säureamidbetaine wie beispielsweise Kokosfettsäureamidopropylbetain.

Der Zusatz eines Bindemittels wie Alkalihydroxid, Wasserglas, Dextrin, Kieselsäureester oder Stärke ist nicht notwendig.

Vorzugsweise geht man so vor, daß man eine teigartige, tensidhaltige Zubereitung mit einem Wassergehalt von 25 bis 60 Gew.-% einsetzt. Beispielsweise kann man zu ihrer Herstellung eine entsprechende Suspension des Erdalkalicarbonats in Wasser mit der gewünschten Menge an grenzflächenaktiver Verbindung versetzen und zur Homogenisierung kneten.

Die Trocknung erfolgt vorzugsweise bei einer Temperatur von 100 bis 240 °C.

Bevorzugt ist die grenzflächenaktive Verbindung in einer solchen Menge in der Zubereitung enthalten, daß sie bezogen auf die Trockensubstanz in einer Menge von 0,01 bis 0,5 Gew.-% in der Zubereitung enthalten ist.

Ein weiterer Gegenstand der vorliegenden Erfindung ist rieselfähiges Erdalkalicarbonat mit einer Körnung von bis zu 10 μm, ausgewählt aus der Gruppe bestehend aus Bariumcarbonat oder Strontiumcarbonat, welches gekennzeichnet ist durch einen Gehalt - bezogen auf die Trockenmasse - von 0,01 bis 1 Gew.-%, vorzugsweise 0,01 bis 0,5 Gew.-% einer grenzflächenaktiven Verbindung, vorzugsweise einer anionischen grenzflächenaktiven Verbindung, insbesondere eines organischen Derivates eines Sulfates oder Sulfonates.

Besonders bevorzugt ist rieselfähiges Bariumcarbonat bzw. Strontiumcarbonat, welches gekennzeichnet ist durch einen Gehalt von 0,01 bis 0,5 Gew.-% an C12-C14-Fettalkoholpolyethylenglycolethersulfat-Natriumsalz, n-C10-C13-Alkylbenzolsulfonat-Natriumsalz, sek-C13-C17-Alkansulfonat-Natriumsalz oder Kokosfettsäureamidopropylbetain.

Das erfindungsgemäße Verfahren gestattet bei Einsatz von sehr geringen Mengen Zusatzstoff die Erzeugung eines trotz kleiner Partikelgröße hervorragend rieselfähigen Bariumcarbonats bzw. Strontiumcarbonats. Das erfindungsgemäße Erdalkalicarbonat, insbesondere des $BaCO_3$, eignet sich hervorragend als Tonzusatz zur Verhinderung von Ausblühungen beim Brennen, beispielsweise von Tonziegeln, das $SrCO_3$ und $BaCO_3$ eignet sich auch für die Glasherstellung.

Das folgende Beispiel soll die Erfindung weiter erläutern, ohne sie in ihrem Umfang einzuschränken.

**Beispiel:**

Herstellung von rieselfähigem $BaCO_3$

1.1. Allgemeine Versuchsvorschrift

Je 700 g $BaCO_3$-Teig mit ca. 30 Gew.-% Wasser wurden mit der jeweiligen grenzflächenaktiven Verbindung versetzt, so daß, bezogen auf die Trockensubstanz, etwa 0,2 Gew.-% im Teig enthalten waren. Nach dem Tensidzusatz wurde der Teig etwa 15 min. lang geknetet, bei 110 °C getrocknet und anschließend durch ein Sieb gedrückt, um ein pulverisiertes Produkt zu erhalten. Vom durch Sieben zerkleinerten Produkt wurde die Bruff-Zahl bestimmt.

1.2. Bestimmung der Bruff-Zahl

| Geräte: | Waage 0,1 1 g genau |
| --- | --- |
| | Glasrohr (Länge 60 cm, Innendurchmesser 3 cm) |
| | Stativ (mit Halterung) |
| | Bodenplatte (belegt mit Schmirgelleinen Nr. 100 und mit zwei senkrecht zueinander stehenden cm-Einteilungen ausgehend vom Mittelpunkt) |
| Durchführung: | 200 g des zu bestimmenden Pulvers, z. B. $BaCO_3$- oder $SrCO_3$-Pulver, werden in ein 60 cm langes Rohr gefüllt. Das Rohr wird an beiden Enden mit flachen Stopfen verschlossen und 20-mal "über Kopf" geschüttelt, um die Probe zu fluidisieren. Das Glasrohr wird nun so in die Halterung des Stativs gesetzt, daß das untere Ende des Rohres 12 cm vom Mittelpunkt der Bodenplatte entfernt ist. Die beiden Stopfen werden nun gleichzeitig entfernt. Das Ausbreitmaß des auf der Platte ausgeflossenen Pulvers wird auf zwei zueinander senkrechten Durchmessern (ablesen auf der cmSkala und mitteln) bestimmt. In der Mitte des Ausbreitkegels wird mit Hilfe einer Nadel oder dergleichen dessen Höhe bestimmt. |

Ausrechnung:

$$\text{Bruffzahl} = \frac{\text{Ausbreitmaß (cm)}}{\text{Kegelhöhe (cm)}}$$

Je größer die Bruff-Zahl, desto besser die Rieselfähigkeit des Produktes.

1.3. Tabellarische Zusammenstellung der verwendeten grenzflächenaktive Verbindungen und die gemessene Bruff-Zahl

| Beispiel Nr. | Handelsname | Gruppe der grenzflächenaktiven Verbindung | Bruff-Zahl | Bemerkungen |
|---|---|---|---|---|
| 1.3.1. | Marlon A350® | Alkylbenzolsulfonat (n-C10-C13-Alkylbenzolsulfonat, Na-Salz) | 27 | -- |
| 1.3.2. | Marlinat 242/28® | Fettalkoholpolyethylenglykolethersulfate (C12-C14 Fettalkohol..., Na-Salz) | 17 | -- |
| 1.3.3. | Marlon PS 65® | Paraffinsulfonat, Na-Salz (sek. C13-C17-Alkansulfonat, Na-Salz) | 13 | flüssig beim Kneten |
| 1.3.4. | Palmolive® | verschiedene | 24 | klebt etwas |
| 1.3.5. | Marlazin L 10® | Kat. Tensid Laurylaminpolyethylenglykolether | 11 | schäumt b. Kneten |
| 1.3.6. (Vergleichsbeispiel) | -- | unbehandeltes Produkt | 9 | -- |

**Patentansprüche**

1. Verfahren zur Herstellung von rieselfähigem Erdalkalicarbonat aus der Gruppe bestehend aus $BaCO_3$ und $SrCO_3$, wobei man eine wäßrige Zubereitung erzeugt, die mindestens 50 Gew.-% des Carbonats in einer Körnung von 0,1 bis 1 μm enthält, die zusätzlich eine oder mehrere organische grenzflächenaktive Verbindungen enthält, wobei bezogen auf die Trockensubstanz eine Gesamtmenge von 0,01 bis 1,0 Gew.-% an grenzflächenaktiver Verbindung in der Zubereitung im wesentlichen gleichmäßig verteilt enthalten ist, und man die Zubereitung trocknet und zerkleinert, um im wesentlichen trockenes, rieselfähiges Erdalkalicarbonat einer Körnung von bis zu 10 μm zu erhalten.

2. Verfahren nach Anspruch 1, **dadurch gekennzeichnet, daß** man rieselfähiges $BaCO_3$ herstellt.

3. Verfahren nach Anspruch 1 oder 2, **dadurch gekennzeichnet, daß** man eine anionische grenzflächenaktive Verbindung, vorzugsweise ein organisches Sulfat- oder Sulfonat-Derivat einsetzt.

4. Verfahren nach Anspruch 3, **dadurch gekennzeichnet, daß** man ein Fettalkoholpolyethylenglycolethersulfat oder ein Alkylbenzolsulfonat, insbesondere in Form der Natrium-Salze, einsetzt.

5. Verfahren nach Anspruch 4, **dadurch gekennzeichnet, daß** man ein Fettalkoholpolyethylenglycolethersulfat mit einem C12-C14-Fettalkohol oder ein Alkylbenzolsulfonat mit einer C10-C13-Alkylkette einsetzt.

6. Verfahren nach Anspruch 5, **dadurch gekennzeichnet, daß** man ein n-C10-C13-Alkylbenzolsulfonat in Form des Natrium-Salzes einsetzt.

7. Verfahren nach Anspruch 1, **dadurch gekennzeichnet, daß** man eine teigartige, eine grenzflächenaktive Verbindung enthaltende Zubereitung mit einem Wassergehalt von 25 bis 60 Gew.-% einsetzt und zur Homogenisierung knetet.

8. Verfahren nach Anspruch 1, **dadurch gekennzeichnet, daß** man die Trocknung bei einer Temperatur von 100 bis 240 °C durchführt.

9. Verfahren nach einem der vorhergehenden Ansprüche, **dadurch gekennzeichnet, daß** man die grenzflächenaktive Verbindung in einer solchen Menge einsetzt, daß sie bezogen auf die Trokkensubstanz in einer Menge von 0,01 bis 0,5 Gew.-% in der Zubereitung enthalten ist.

10. Im wesentlichen trockenes, rieselfähiges Erdalkalicarbonat ausgewählt aus der Gruppe bestehend aus Bariumcarbonat und Strontiumcarbonat, **gekennzeichnet durch** einen Gehalt von 0,01 bis 1 Gew.-%, vorzugsweise 0,01 bis 0,5 Gew.-% einer grenzflächenaktiven Verbindung, vorzugsweise einer anionischen grenzflächenaktiven Verbindung, insbesondere eines organischen Derivates eines Sulfates oder Sulfonates, und einer Körnung von bis zu 10 μm, erhältlich nach dem Verfahren gemäß einem der Ansprüche 1 bis 9.

11. Rieselfähiges Bariumcarbonat bzw. Strontiumcarbonat nach Anspruch 10, **gekennzeichnet durch** einen Gehalt von 0,01 bis 1 Gew.-%, vorzugsweise 0,01 bis 0,5 Gew.-% an C12-C14-Fettalkoholpolyethylenglycolethersulfat-Natriumsalz, n-C10-C13-Alkylbenzolsulfonat-Natriumsalz, sek-C13-C17-Alkansulfonat-Natriumsalz oder Kokosfettsäureamidopropylbetain.

12. Verwendung des rieselfähigen Erdalkalicarbonats gemäß Anspruch 10 oder 11 als Ausblühungen verhindernder Tonzusatz.

## Claims

1. A process for the preparation of pourable alkaline-earth carbonate from the group consisting of $BaCO_3$ and $SrCO_3$, wherein an aqueous preparation is produced which contains at least 50% by weight of the carbonate in a grain size of 0.1 to 1 μm, which additionally contains one or more organic surface-active compounds, wherein relative to the dry substance a total quantity of 0.01 to 1.0% by weight of surface-active compound is contained, substantially regularly distributed, in the preparation, and the preparation is dried and comminuted, in order to obtain substantially dry, pourable alkaline-earth carbonate of a grain size of up to 10 μm.

2. A process according to Claim 1, **characterised in that** pourable $BaCO_3$ is prepared.

3. A process according to Claim 1 or 2, **characterised in that** an anionic surface-active compound, preferably an organic sulphate or sulphonate derivative, is used.

4. A process according to Claim 3, **characterised in that** a fatty alcohol polyethylene glycol ether sulphate or an alkyl benzenesulphonate, in particular in the form of the sodium salts, is used.

5. A process according to Claim 4, **characterised in that** a fatty alcohol polyethylene glycol ether sulphate with a C12-C14 fatty alcohol or an alkyl benzenesulphonate with a C10-C13-alkyl chain is used.

6. A process according to Claim 5, **characterised in that** an n-C10-C13-alkyl benzenesulphonate in the form of the sodium salt is used.

7. A process according to Claim 1, **characterised in that** a pasty preparation containing a surface-active compound and having a water content of 25 to 60% by weight is used and is kneaded for homogenisation.

8. A process according to Claim 1, **characterised in that** the drying is effected at a temperature of 100 to 240°C.

9. A process according to one of the preceding claims, **characterised in that** the surface-active compound is used in such a quantity that it is contained in the preparation in a quantity of 0.01 to 0.5% by weight, relative to the dry substance.

10. Substantially dry, pourable alkaline-earth carbonate, selected from the group consisting of barium carbonate and strontium carbonate, **characterised by** a content of 0.01 to 1% by weight, preferably 0.01 to 0.5% by weight, of a surface-active compound, preferably an anionic surface-active compound, in particular an organic derivative of a sulphate or sulphonate, and a grain size of up to 10 µm, obtainable according to the process according to one of Claims 1 to 9.

11. A pourable barium carbonate or strontium carbonate according to Claim 10, **characterised by** a content of 0.01 to 1% by weight, preferably 0.01 to 0.5%, of C12-C14-fatty alcohol polyethylene glycol ether sulphate sodium salt, n-C10-C13-alkylbenzene sulphonate sodium salt, sec. C13-C17-alkane sulphate sodium salt or cocamidopropyl betaine.

12. The use of the pourable alkaline-earth carbonate according to Claim 10 or 11 as a clay additive which prevents efflorescence.


**Revendications**

1. Procédé de préparation d'un carbonate alcalino-terreux coulable appartenant au groupe constitué de $BaCO_3$ et de $SrCO_3$, dans lequel on élabore une préparation aqueuse, contenant au moins 50 % en poids du carbonate avec une granulométrie de 0,1 à 1 µm, et contenant en outre un ou plusieurs composé(s) tensioactif(s) organique (s), une quantité totale de 0,01 à 1,0 % en poids de composé tensioactif, sur la base de la matière sèche, étant contenue et répartie de façon sensiblement homogène dans la préparation, et dans lequel on sèche la préparation et on la broie, afin d'obtenir un carbonate alcalino-terreux coulable, sensiblement sec, d'une granulométrie allant jusqu'à 10 µm.

2. Procédé selon la revendication 1, **caractérisé en ce que** l'on prépare du $BaCO_3$ coulable.

3. Procédé selon la revendication 1 ou 2, **caractérisé en ce que** l'on utilise un composé tensioactif anionique, de préférence un dérivé de sulfate ou de sulfonate organique.

4. Procédé selon la revendication 3, **caractérisé en ce que** l'on utilise un éthersulfate de polyéthylène glycol d'alcool gras ou un alkylbenzène sulfonate, en particulier sous forme des sels de sodium.

5. Procédé selon la revendication 4, **caractérisé en ce que** l'on utilise un éthersulfate de polyéthylène glycol d'alcool gras avec un alcool gras en $C_{12}$ à $C_{14}$, ou un alkylbenzène sulfonate avec une chaîne alkyle en $C_{10}$ à $C_{13}$.

6. Procédé selon la revendication 5, **caractérisé en ce que** l'on utilise un n-alkyl en $C_{12}$ à $C_{13}$ -benzène sulfonate sous forme du sel de sodium.

7. Procédé selon la revendication 1, **caractérisé en ce qu'**on utilise une préparation contenant un composé pâteux de type tensioactif et ayant une teneur en eau comprise entre 25 et 60 % en poids et **en ce que** l'on malaxe jusqu'à homogénéité.

8. Procédé selon la revendication 1, **caractérisé en ce que** l'on procède au séchage à une température comprise entre 100 et 240 °C.

9. Procédé selon l'une quelconque des revendications précédentes, **caractérisé en ce que** l'on utilise le composé tensioactif dans une quantité telle qu'il est présent, sur la base de la matière sèche, à raison de 0,01 et 0,5 % en poids de la préparation.

10. Carbonate alcalino-terreux coulable, sensiblement sec, choisi dans le groupe constitué du carbonate de baryum et du carbonate de strontium, **caractérisé par** une teneur en un composé tensioactif de 0,01 à 1 % en poids, de préférence de 0,01 à 0,5 % en poids, de préférence d'un composé tensioactif anionique, en particulier d'un dérivé organique d'un sulfate ou d'un sulfonate, et ayant une granulométrie allant jusqu'à 10 µm, pouvant être obtenu par le procédé selon l'une des revendications 1 à 9.

**11.** Carbonate de baryum ou, selon les cas, carbonate de strontium coulable selon la revendication 10, **caractérisé par** une teneur de 0,01 à 1 % en poids, de préférence de 0,01 à 0,5 % en poids en sel de sodium d'éthersulfate de polyéthylène glycol d'alcool gras en $C_{12}$ à $C_{14}$, en sel de sodium de n-alkyl en $C_{10}$ à $C_{13}$-benzène sulfonate, en sel de sodium de sec.-alcane en $C_{13}$ à $C_{17}$ -sulfonate ou encore en amidopropylbétaïne d'acide gras de coprah.

**12.** Utilisation du carbonate alcalino-terreux coulable selon la revendication 10 ou 11 en tant qu'additif pour l'argile empêchant les efflorescences.